# EUROPEAN PATENT SPECIFICATION

(11) **EP 4 252 451 B1**
(45) Date of publication and mention of the grant of the patent: **21.10.2026**
(21) Application number: 20820548.4
(22) Date of filing: 30.11.2020
(51) Int. Cl.: H04W 28/16, H04L 41/0806, H04L 41/0895, H04L 47/83, H04W 24/02, H04W 88/08, H04L 47/76, H04L 47/78, H04L 47/70

(54) **REAL-TIME PROCESSING RESOURCE SCHEDULING FOR PHYSICAL LAYER PROCESSING AT VIRTUAL BASEBAND UNITS**
ECHTZEITVERARBEITUNGSRESSOURCENPLANUNG ZUR VERARBEITUNG PHYSIKALISCHER SCHICHTEN AN VIRTUELLEN BASISBANDEINHEITEN
PLANIFICATION DE RESSOURCES DE TRAITEMENT EN TEMPS RÉEL POUR UN TRAITEMENT DE COUCHE PHYSIQUE AU NIVEAU D'UNITÉS DE BANDE DE BASE VIRTUELLES

(43) Date of publication of application: 04.10.2023
(73) Proprietor: Telefonaktiebolaget LM Ericsson (publ), 164 83 Stockholm (SE)
(72) Inventor: EKER, Johan, 223 55 Lund (SE); FIALLOS, Edgard, Ottawa, Ontario K2M1P4 (CA)
(74) Representative: Ericsson
(86) International application number: PCT/IB2020/061295
(87) International publication number: WO 2022/112836

(56) References cited:
- CN-B- 104 619 029
- US-A1- 2019 007 246
- BARAHMAN MOJGAN ET AL: "A QoS-Demand-Aware Computing Resource Management Scheme in Cloud-RAN", IEEE OPEN JOURNAL OF THE COMMUNICATIONS SOCIETY, IEEE, vol. 1, 29 October 2020 (2020-10-29), pages 1850 - 1863, XP011824223, DOI: 10.1109/OJCOMS.2020.3034297
- KHEDHER HATEM ET AL: "Real Traffic-Aware Scheduling of Computing Resources in Cloud-RAN", 2020 INTERNATIONAL CONFERENCE ON COMPUTING, NETWORKING AND COMMUNICATIONS (ICNC), IEEE, 17 February 2020 (2020-02-17), pages 422 - 427, XP033751913, DOI: 10.1109/ICNC47757.2020.9049679

## Description

### TECHNICAL FIELD

The present application relates generally to the field of communication networks and more specifically to techniques that facilitate use of commercial off-the-shelf (COTS) computing systems, such as cloud infrastructure, for real-time processing associated with physical layer (PHY) communications in a wireless network (e.g., 5G network).

### BACKGROUND

In general, "cloud computing" refers to the delivery of remote computing services such as application servers, storage, databases, networking, analytics, and intelligence to users over the Internet. "Cloud" infrastructure" generally refers to the hardware and software components such as servers, storage, networking, etc., that are needed to support the computing requirements of a cloud computing model. Cloud infrastructure also typically includes an abstraction layer that virtualizes the hardware resources and logically presents them to users (e.g., as "virtual machines") through application program interfaces (APIs). Such virtualized resources are typically hosted by a service provider are delivered to users over the public Internet or a private network. Publicly available cloud infrastructure can be referred to as "infrastructure as a service". Cloud infrastructure is typically built on top on large scale commodity servers, typically based on the well-known Intel x86 architecture used in personal computing.

Cloud technology has swiftly transformed information and communications technology (ICT) and it is continuing to spread to new areas. Many traditional ICT applications, such as webbased services, are suitable for cloud deployment in that they have relaxed timing or performance requirements. These services are typically based on HyperText Transport Protocol (HTTP) signaling. A common platform used to provide cloud-based web-services is Kubernetes, which can coordinate a highly available cluster of connected computers (also referred to as "processing elements" or "hosts") to work as a single unit. Kubernetes deploys applications packaged in "containers" (e.g., via its "container runtime") to decouple them from individual computing hosts. These Kubernetes abstractions facilitate deploying applications to a cloud-based computing cluster without tying them specifically to individual computing machines. In this manner, containerized applications are more flexible and available than in deployment modes where applications were installed directly onto specific machines. Such containerized applications are referred as "cloud-native" applications.

However, many other types of applications and services have more strict timing and/or performance requirements that have prevented migration of these applications and services to cloud infrastructure. These include applications that have "real-time" requirements. For example, an application or service has a "hard real-time" requirement if missing a deadline for completing an operation or producing a result will result in a catastrophic failure to the application and/or an associated physical system. Examples include factory automation, networking, vehicle control, etc. In contrast, an application or service has a "soft real-time" requirement if missing a deadline will result in reduced performance without catastrophic failure. Examples include media streaming, financial transaction processing, etc.

In general, new scheduling techniques and hardware accelerators are needed to make cloud infrastructure suitable for more mission-critical applications with real-time requirements, such as networking and communications. For example, the Internet Engineering Task Force (IETF) network function virtualization (NFV) initiative is standardising a virtual networking infrastructure and a virtual network function (VNF) architecture. Even so, this effort is focused on higher protocol layers and/or network functions that with soft real-time requirements, such as the IP Multimedia Subsystem (IMS).

As another example, cloud radio access network (Cloud RAN, or C-RAN) is a centralized, cloud computing-based architecture for radio access networks that is intended to support 2G, 3G, 4G, and possibly future systems standardized by 3GPP. C-RAN uses open platforms and real-time virtualization technology from cloud computing to achieve dynamic shared resource allocation and support multi-vendor, multi-technology environments. C-RAN systems include remote radio heads (RRHs) that connect to baseband units (BBUs) over a standard Common Public Radio Interface (CPRI). Even so, BBUs are typically purpose-built using specialized, vendor-proprietary hardware platforms to meet the hard real-time requirements of lower protocol layers in wireless networks.

To further reduce costs for network operators, it is ultimately desirable to migrate digital processing for lower protocol layers also to cloud infrastructure, including physical layer (PHY, also called L1) and medium access control layer (MAC, also called L2). Although commercial off-the-shelf (COTS) servers, processing units, and/or virtualization software used in cloud infrastructure are continually improving, they still lack the capability to support hard real-time requirements on small time scales found in L1/L2 processing. Improvements are needed to achieve these goals, such as new techniques for determining resource needs and scheduling resources for L1/L2 processing on cloud infrastructure.
BARAHMAN MOJGAN ET AL.: "A QoS-Demand-Aware Computing Resource Management Scheme in Cloud-RAN", IEEE OPEN JOURNAL OF THE COMMUNICATIONS SOCIETY, vol. 1, 29 October 2020, pages 1850-1863 discloses a game-based optimization algorithm to distribute computing resources among baseband units (BBUs) in a BBU-pool whereby resources utilization is maximized. The model allocates computing resources on-demand, based on the instantaneous requests of BBUs, using a gametheory bargaining approach. In the case that the available resources are not sufficient to fulfil all instantiation requests, BBUs are prioritized to ensure the adequate Quality of Service, lowpriority ones being always guaranteed a minimum computing resource to avoid them to crash.
US 2019/007246 A1 discloses a distributed radio frequency communication system facilitating communication between a wireless terminal and a core network. The system includes a remote radio unit (RRU) and a BBU coupled to the core network. A fronthaul link is coupled to the BBU and the RRU. The fronthaul link utilizes an adaptive fronthaul protocol for communication between the BBU and the RRU. The adaptive fronthaul protocol has provisions for adapting to conditions of the fronthaul link and radio network by changing the way data is communicated over the fronthaul link.

### SUMMARY

Embodiments of the present disclosure provide specific improvements to implementation of digital (or baseband) processing of lower protocol layers in a wireless network on COTS computing infrastructure by facilitating solutions to overcome the exemplary problems, issues, and/or difficulties summarized above. The invention relates to a method for scheduling processing resources for PHY processing tasks in a wireless network, and to processing system, a wireless network, and a task resource scheduler in the same technical domain of resource scheduling for baseband/ PHY processing in wireless networks as defined in the appended independent claims. Embodiments representing particular realisations of the invention are defined in the appended dependent claims.

### BRIEF DESCRIPTION OF THE DRAWINGS

Figures 1-2 illustrate two high-level views of an exemplary 5G/NR network architecture.
Figure 3 shows an exemplary configuration of NR user plane (UP) and control plane (CP) protocol stacks.
Figures 4A-4B show two exemplary timeslot structures for NR.
Figure 5 shows an exemplary real-time resource management framework known as ACTORS.
Figure 6 shows a high-level block diagram of a Cutting edge Reconfigurable ICs for Stream Processing (CRISP) architecture.
Figure 7 shows an exemplary Cloud RAN (C-RAN) implementation of a 5G network, according to various exemplary embodiments of the present disclosure.
Figures 8-10 are diagrams of various exemplary systems that include a PHY task resource scheduler (TRS), according to various exemplary embodiments of the present disclosure.
Figures 11-12 illustrates wireless network baseband processing performed for a cell configured for time-division duplexing (TDD).
Figures 13-14 illustrate wireless network baseband processing for two cells configured with the same TDD pattern but a two-slot offset, according to various exemplary embodiments of the present disclosure.
Figure 15 is a flow diagram for an exemplary method (e.g., procedure) for scheduling processing resources for physical layer (PHY) communications in a wireless network, according to various exemplary embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, *etc.* are to be interpreted openly as referring to at least one instance of the element, apparatus, component, means, step, *etc.,* unless explicitly stated otherwise. The steps of any methods disclosed herein do not have to be performed in the exact order disclosed, unless a step is explicitly described as following or preceding another step and/or where a step must necessarily follow or precede another step due to some dependency. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Furthermore, the following terms are used throughout the description given below:
- Radio Node: As used herein, a "radio node" can be either a radio access node or a wireless device."
- Node: As used herein, a "node" can be a network node or a wireless device.
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station *(e.g.,* a New Radio (NR) base station (gNB) in a 3GPP Fifth Generation (5G) NR network or an enhanced or evolved Node B (eNB) in a 3GPP LTE network), base station distributed components (*e.g*., CU and DU), a high-power or macro base station, a low-power base station (*e.g*., micro, pico, femto, or home base station, or the like), an integrated access backhaul (IAB) node, a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customerpremise equipment (CPE), mobile-type communication (MTC) devices, Internet-of-Things (IoT) devices, vehicle-mounted wireless terminal devices, *etc.* Unless otherwise noted, the term "wireless device" is used interchangeably herein with the term "user equipment" (or "UE" for short).
- Network Node: As used herein, a "network node" is any node that is either part of the radio access network (*e.g*., a radio access node or equivalent name discussed above) or of the core network (*e.g*., a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g*., administration) in the cellular communications network.

Note that the description herein focuses on a 3GPP cellular communications system and, as such, 3GPP terminology or terminology similar to 3GPP terminology is oftentimes used. However, the concepts disclosed herein are not limited to a 3GPP system. Furthermore, although the term "cell" is used herein, it should be understood that (particularly with respect to 5G NR) beams may be used instead of cells and, as such, concepts described herein apply equally to both cells and beams.

In the present disclosure, the term "service" is used generally to refer to a set of data, associated with one or more applications, that is to be transferred via a network with certain specific delivery requirements that need to be fulfilled in order to make the applications successful. In the present disclosure, the term "component" is used generally to refer to any component needed for the delivery of the service. Examples of components are cloud infrastructure with related resources such as computation and storage.

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

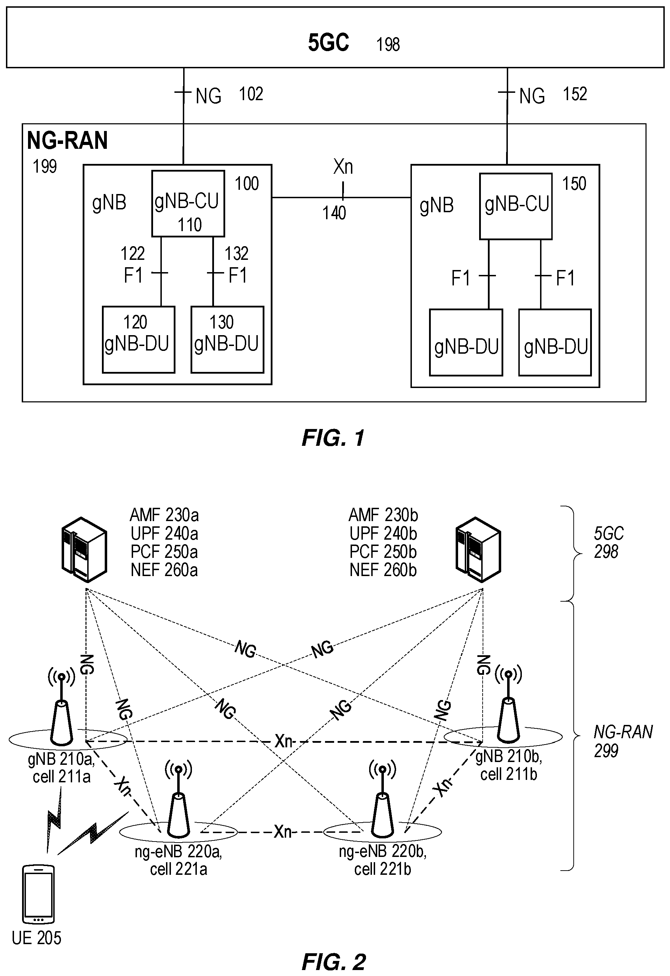

Figure 1 illustrates an exemplary high-level view of the 5G network architecture, consisting of a Next Generation RAN (NG-RAN) 199 and a 5G Core (5GC) 198. NG-RAN 199 can include a set of gNodeB's (gNBs) connected to the 5GC via one or more NG interfaces, such as gNBs 100, 150 connected via interfaces 102, 152, respectively. In addition, the gNBs can be connected to each other via one or more Xn interfaces, such as Xn interface 140 between gNBs 100 and 150. With respect the NR interface to UEs, each of the gNBs can support frequency division duplexing (FDD), time division duplexing (TDD), or a combination thereof.

NG-RAN 199 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region," which is defined in 3GPP TS 23.501. If security protection for CP and UP data on TNL of NG-RAN interfaces is supported, NDS/IP shall be applied.

The NG RAN logical nodes shown in Figure 1 include a central (or centralized) unit (CU or gNB-CU) and one or more distributed (or decentralized) units (DU or gNB-DU). For example, gNB 100 includes gNB-CU 110 and gNB-DUs 120 and 130. CUs *(e.g.,* gNB-CU 110) are logical nodes that host higher-layer protocols and perform various gNB functions such controlling the operation of DUs. Each DU is a logical node that hosts lower-layer protocols and can include, depending on the functional split, various subsets of the gNB functions. As such, each of the CUs and DUs can include various circuitry needed to perform their respective functions, including processing circuitry, transceiver circuitry (*e.g*., for communication), and power supply circuitry. Moreover, the terms "central unit" and "centralized unit" are used interchangeably herein, as are the terms "distributed unit" and "decentralized unit."

A gNB-CU connects to gNB-DUs over respective F1 logical interfaces, such as interfaces 122 and 132 shown in Figure 1. The gNB-CU and connected gNB-DUs are only visible to other gNBs and the 5GC as a gNB. In other words, the F1 interface is not visible beyond gNB-CU.

Figure 2 shows a high-level view of an exemplary 5G network architecture, including a Next Generation Radio Access Network (NG-RAN) 299 and a 5G Core (5GC) 298. As shown in the figure, NG-RAN 299 can include gNBs 210 *(e.g.,* 210a,b) and ng-eNBs 220 *(e.g.,* 220a,b) that are interconnected with each other via respective Xn interfaces. The gNBs and ng-eNBs are also connected via the NG interfaces to 5GC 298, more specifically to the AMF (Access and Mobility Management Function) 230 *(e.g.,* AMFs 230a,b) via respective NG-C interfaces and to the UPF (User Plane Function) 240 *(e.g.,* UPFs 240a,b) via respective NG-U interfaces. Moreover, the AMFs 230a,b can communicate with one or more policy control functions (PCFs, e.g., PCFs 250a,b) and network exposure functions (NEFs, e.g., NEFs 260a,b).

Each of the gNBs 210 can support the NR radio interface including frequency division duplexing (FDD), time division duplexing (TDD), or a combination thereof. Each of ng-eNBs 220 can support the fourth-generation (4G) Long-Term Evolution (LTE) radio interface. Unlike conventional LTE eNBs, however, ng-eNBs 220 connect to the 5GC via the NG interface. Each of the gNBs and ng-eNBs can serve a geographic coverage area including one more cells, such as cells 211a-b and 221a-b shown in Figure 2. Depending on the particular cell in which it is located, a UE 205 can communicate with the gNB or ng-eNB serving that particular cell via the NR or LTE radio interface, respectively. Although Figure 2 shows gNBs and ng-eNBs separately, it is also possible that a single NG-RAN node provides both types of functionality.

5G/NR technology shares many similarities with LTE technology. For example, NR uses CP-OFDM (Cyclic Prefix Orthogonal Frequency Division Multiplexing) in the DL and both CP-OFDM and DFT-spread OFDM (DFT-S-OFDM) in the UL. As another example, in the time domain, NR DL and UL physical resources are organized into equal-sized 1-ms subframes. A subframe is further divided into multiple slots of equal duration, with each slot including multiple OFDM-based symbols. However, time-frequency resources can be configured much more flexibly for an NR cell than for an LTE cell. For example, rather than a fixed 15-kHz OFDM subcarrier spacing (SCS) as in LTE, NR SCS can range from 15 to 240 kHz, with even greater SCS considered for future NR releases.

In addition to providing coverage via cells as in LTE, NR networks also provide coverage via "beams." In general, a downlink (DL, i.e., network to UE) "beam" is a coverage area of a network-transmitted reference signal (RS) that may be measured or monitored by a UE. In NR, for example, RS can include any of the following: synchronization signal/PBCH block (SSB), channel state information RS (CSI-RS), tertiary reference signals (or any other sync signal), positioning RS (PRS), demodulation RS (DMRS), phase-tracking reference signals (PTRS), *etc.* In general, SSB is available to all UEs regardless of the state of their connection with the network, while other RS *(e.g.,* CSI-RS, DM-RS, PTRS) are associated with specific UEs that have a network connection.

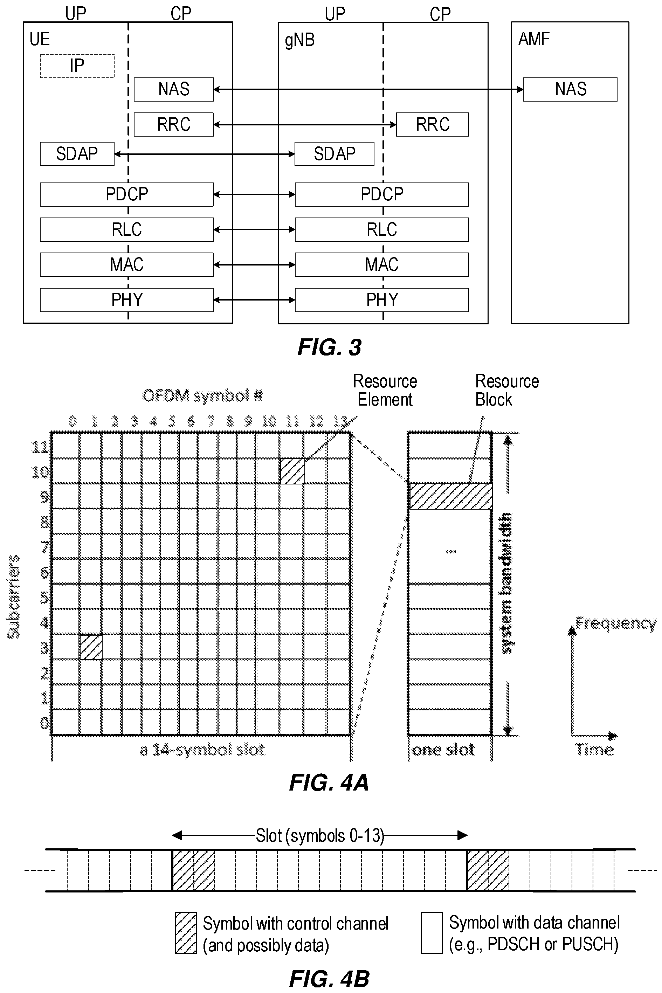

Figure 3 shows an exemplary configuration of NR user plane (UP) and control plane (CP) protocol stacks between a UE, a gNB, and an AMF, such as those shown in Figures 1-2. The Physical (PHY), Medium Access Control (MAC), Radio Link Control (RLC), and Packet Data Convergence Protocol (PDCP) layers between the UE and the gNB are common to UP and CP. The PDCP layer provides ciphering/deciphering, integrity protection, sequence numbering, reordering, and duplicate detection for both CP and UP. In addition, PDCP provides header compression and retransmission for UP data.

On the UP side, Internet protocol (IP) packets arrive to the PDCP layer as service data units (SDUs), and PDCP creates protocol data units (PDUs) to deliver to RLC. When each IP packet arrives, PDCP starts a discard timer. When this timer expires, PDCP discards the associated SDU and the corresponding PDU. If the PDU was delivered to RLC, PDCP also indicates the discard to RLC.

The RLC layer transfers PDCP PDUs to the MAC through logical channels (LCH). RLC provides error detection/correction, concatenation, segmentation/reassembly, sequence numbering, reordering of data transferred to/from the upper layers. If RLC receives a discard indication from associated with a PDCP PDU, it will discard the corresponding RLC SDU (or any segment thereof) if it has not been sent to lower layers.

The MAC layer provides mapping between LCHs and PHY transport channels, LCH prioritization, multiplexing into or demultiplexing from transport blocks (TBs), hybrid ARQ (HARQ) error correction, and dynamic scheduling (on gNB side). The PHY layer provides transport channel services to the MAC layer and handles transfer over the NR radio interface, e.g., via modulation, coding, antenna mapping, and beam forming.

On UP side, the Service Data Adaptation Protocol (SDAP) layer handles quality-of-service (QoS). This includes mapping between QoS flows and Data Radio Bearers (DRBs) and marking QoS flow identifiers (QFI) in UL and DL packets. On CP side, the non-access stratum (NAS) layer is between UE and AMF and handles UE/gNB authentication, mobility management, and security control.

The RRC layer sits below NAS in the UE but terminates in the gNB rather than the AMF. RRC controls communications between UE and gNB at the radio interface as well as the mobility of a UE between cells in the NG-RAN. RRC also broadcasts system information (SI) and performs establishment, configuration, maintenance, and release of DRBs and Signaling Radio Bearers (SRBs) and used by UEs. Additionally, RRC controls addition, modification, and release of carrier aggregation (CA) and dual-connectivity (DC) configurations for UEs. RRC also performs various security functions such as key management.

After a UE is powered ON it will be in the RRC_IDLE state until an RRC connection is established with the network, at which time the UE will transition to RRC_CONNECTED state (*e.g.*, where data transfer can occur). The UE returns to RRC_IDLE after the connection with the network is released. In RRC_IDLE state, the UE's radio is active on a discontinuous reception (DRX) schedule configured by upper layers. During DRX active periods (also referred to as "DRX On durations"), an RRC_IDLE UE receives SI broadcast in the cell where the UE is camping, performs measurements of neighbor cells to support cell reselection, and monitors a paging channel on PDCCH for pages from 5GC via gNB. An NR UE in RRC_IDLE state is not known to the gNB serving the cell where the UE is camping. However, NR RRC includes an RRC_INACTIVE state in which a UE is known (e.g., via UE context) by the serving gNB. RRC_INACTIVE has some properties similar to a "suspended" condition used in LTE.

An NR UE can be configured with up to four carrier bandwidth parts (BWPs) in the DL with a single DL BWP being active at a given time. A UE can be configured with up to four BWPs in the UL with a single UL BWP being active at a given time. If a UE is configured with a supplementary UL, the UE can be configured with up to four additional BWPs in the supplementary UL, with a single supplementary UL BWP being active at a given time. In this manner, a UE can be configured with a narrow BWP *(e.g.,* 10 MHz) and a wide BWP *(e.g.,* 100 MHz), each starting at a particular CRB, but only one BWP can be active for the UE at a given point in time.

NR supports various sub-carrier spacings (SCS) Δ*f* = (15 × 2^{µ}) kHz, where µ ∈ (0,1,2,3,4) are referred to as "numerologies." Numerology µ = 0 (*i.e*., Δ*f* = 15*kHz*) provides the basic (or reference) SCS that is also used in LTE. The symbol duration, cyclic prefix (CP) duration, and slot duration are inversely related to SCS or numerology. For example, there is one (1-ms) slot per subframe for Δ*f* = 15*kHz,* two 0.5-ms slots per subframe for Δ*f* = 30*kHz,* etc. In addition, the maximum carrier bandwidth is directly related to numerology according to 2^{µ} * *50MHz.* Table 1 below summarizes the supported NR numerologies and associated parameters. Different DL and UL numerologies can be configured by the network.

**Table 1.**

| *µ* | **Δ*****f** =* **2*^{µ}*** · **15** (kHz) | Cyclic prefix (CP) | CP duration | Symbol duration | Symbol+ CP | Slot duration | Max carrier BW |
|---|---|---|---|---|---|---|---|
| 0 | 15 | Normal | 4.69 µs | 66.67 µs | 71.35 µs | 1 ms | 50 MHz |
| 1 | 30 | Normal | 2.34 µs | 33.33 µs | 35.68 µs | 0.5 ms | 100 MHz |
| 2 | 60 | Normal, Extended | 1.17 µs | 16.67 µs | 17.84 µs | 0.25 ms | 200 MHz |
| 3 | 120 | Normal | 0.59 µs | 8.33 µs | 8.92 µs | 125 µs | 400 MHz |
| 4 | 240 | Normal | 0.29 µs | 4.17 µs | 4.46 µs | 62.5 µs | 800 MHz |

Figure 4A shows an exemplary time-frequency resource grid for an NR slot. As illustrated in Figure 4A, a resource block (RB) consists of a group of 12 contiguous OFDM subcarriers for a duration of a 14-symbol slot. A resource element (RE) consists of one subcarrier in one slot. The slot shown in Figure 4A is for symbols with normal CP; a slot can include 12 symbols with extended CP.

In general, an NR physical channel corresponds to a set of REs carrying information that originates from higher layers. Downlink (DL, *i.e.,* gNB to UE) physical channels include Physical Downlink Shared Channel (PDSCH), Physical Downlink Control Channel (PDCCH), and Physical Broadcast Channel (PBCH).

PDSCH is the main physical channel used for unicast DL data transmission, but also for transmission of RAR (random access response), certain system information blocks (SIBs), and paging information. PBCH carries the basic system information (SI) required by the UE to access a cell. PDCCH is used for transmitting DL control information (DCI) including scheduling information for DL messages on PDSCH, grants for UL transmission on PUSCH, and channel quality feedback *(e.g.,* CSI) for the UL channel.

Uplink (UL, *i.e.,* UE to gNB) physical channels include Physical Uplink Shared Channel (PUSCH), Physical Uplink Control Channel (PUCCH), and Physical Random-Access Channel (PRACH). PUSCH is the uplink counterpart to the PDSCH. PUCCH is used by UEs to transmit uplink control information (UCI) including HARQ feedback for gNB DL transmissions, channel quality feedback *(e.g.,* CSI) for the DL channel, scheduling requests (SRs), *etc.* PRACH is used for random access preamble transmission.

Within the NR DL, certain REs within each subframe are reserved for the transmission of reference signals (RS). These include demodulation reference signals (DM-RS), which are transmitted to aid the UE in the reception of an associated PDCCH or PDSCH. Other DL reference signals include positioning reference signals (PRS) and CSI reference signals (CSI-RS), the latter of which are monitored by the UE for the purpose of providing channel quality feedback (*e.g.,* CSI) for the DL channel. Additionally, phase-tracking RS (PTRS) are used by the UE to identify common phase error (CPE) present in sub-carriers of a received DL OFDM symbol.

Other RS-like DL signals include Primary Synchronization Sequence (PSS) and Secondary Synchronization Sequence (SSS), which facilitate the UEs time and frequency synchronization and acquisition of system parameters (*e.g*., via PBCH). The PSS, SSS, and PBCH are collectively referred to as an SS/PBCH block (SSB).

The NR UL also includes DM-RS, which are transmitted to aid the gNB in the reception of an associated PUCCH or PUSCH, and PTRS, which are used by the gNB to identify CPE present in sub-carriers of a received UL OFDM symbol. The NR UL also includes sounding reference signals (SRS), which perform a similar function in the UL as CSI-RS in the DL.

Figure 4B shows another exemplary NR slot structure comprising 14 symbols. In this arrangement, PDCCH is confined to a region containing a particular number of symbols and a particular number of subcarriers, referred to as the control resource set (CORESET). In the exemplary structure shown in Figure 4B, the first two symbols contain PDCCH and each of the remaining 12 symbols contains physical data channels (PDCH), *i.e.,* either PDSCH or PUSCH. Depending on the particular CORESET configuration (discussed below), however, the first two slots can also carry PDSCH or other information, as required.

A CORESET can include one or more RBs (*i.e.,* multiples of 12 REs) in the frequency domain and 1-3 OFDM symbols in the time domain. The smallest unit used for defining CORESET is resource element group (REG), which spans one RB (i.e., 12 REs) in frequency and one OFDM symbol in time. CORESET resources can be indicated to a UE by RRC signaling. In addition to PDCCH, each REG in a CORESET contains DM-RS to aid in the estimation of the radio channel over which that REG was transmitted.

NR data scheduling can be performed dynamically, *e.g*., on a per-slot basis. In each slot, the base station *(e.g.,* gNB) transmits downlink control information (DCI) over PDCCH that indicates which UE is scheduled to receive data in that slot, as well as which RBs will carry that data. A UE first detects and decodes DCI and, if the DCI includes DL scheduling information for the UE, receives the corresponding PDSCH based on the DL scheduling information. DCI formats 1_0 and 1_1 are used to convey PDSCH scheduling. Likewise, DCI on PDCCH can include UL grants that indicate which UE is scheduled to transmit data on PUSCH in that slot, as well as which RBs will carry that data. A UE first detects and decodes DCI and, if the DCI includes an uplink grant for the UE, transmits the corresponding PUSCH on the resources indicated by the UL grant.

Scheduling of workloads for High Performance Computing (HPC) and cloud systems is a well-researched technical field with a large body of work. However, the main focus has long been on batch processing rather than stream processing. In general, throughput and fairness are key criteria for batch processing whereas timeliness and/or latency are more important for stream processing. In this context, "latency" refers generally to an amount of time between a request for computing resources for a workload (or task) and the scheduled time for the workload to run on the allocated computing resources. Alternately, latency can be the time required to make a scheduling decision for a resource request. However, workload scheduling for HPC typically does not address hard real-time constraints and/or timing guarantees associated with data streams.

Real-time computing systems is another well-researched area with a large body of work. Historically, real-time systems were scheduled by cyclic executives, typically constructed in an *ad hoc* manner. During the 1970's and 1980's, real-time computing infrastructure was developed based on a fixed-priority scheduling theory, in which each computing workload is assigned a priority via some policy. In real-time computing vernacular, a task may consist of several jobs, with each job of the same task assigned the same priority. Contention for resources is resolved in favor of the job with the higher priority that is ready to run. Even so, there has been little (if any) work on adaptive scheduling of streaming data (i.e., with real-time requirements)that varies over time to meet variations in application workload.

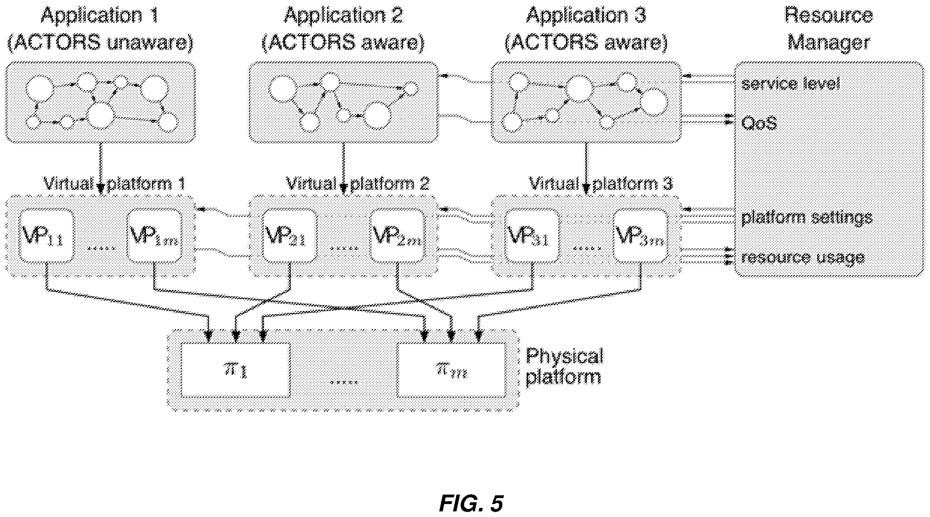

There are several existing frameworks for adaptive resource management, most of them at very early stages of development. Figure 5 shows an exemplary real-time resource management framework, also known as ACTORS. The ACTORS resource management abstracts available physical computing resources via "virtual platforms", e.g., virtual machines (VMs), containers (e.g., Kubernetes), or other execution environments. Individual applications can be ACTORS-aware or ACTORS-unaware. The ACTORS resource manager has no insight into health of individual application other than single-value metrics (e.g., "happiness"). Furthermore, the ACTORS resource manager does not explicitly deal with any real-time scheduling decision that depends on an application's current workload.

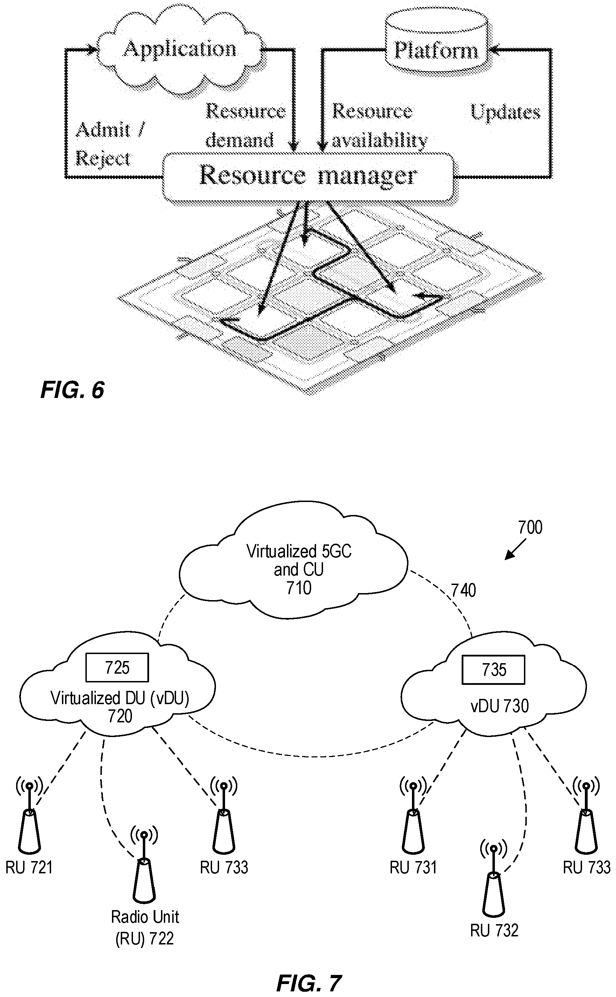

Another work specifically targeted for scheduling of stream processing is known as Cutting edge Reconfigurable ICs for Stream Processing (CRISP). In particular, CRISP includes a multiprocessor system-on-a-chip (MPSoC) that supports dynamic reconfiguration of computing resources (i.e., at the hardware level) according to application resource requirements. Figure 6 shows a high-level block diagram of the CRISP architecture. The CRISP resource manager considers both platform resource availability and application resource demand. However, it does not schedule based on real-time constraints, nor does it utilize specific knowledge about the application (other than a generic resource requirement).

Figure 7 shows an exemplary Cloud RAN (C-RAN) implementation of a 5G network 700, such as the 5G network discussed above in relation to Figures 1-2. In this exemplary implementation, the 5GC and the various CUs in the RAN are instantiated in centralized, cloud-based computing infrastructure (710). CUs implemented in this manner can be referred to as virtualized CUs (vCUs). More specifically, the NAS and higher radio protocol layers (e.g., RRC, IP, etc.) are implemented in the centralized infrastructure 710, which in some instances can be COTS computing hardware and software.

As shown in Figure 7, the vCUs can communicate with their corresponding DUs over a communication bus 740, which can be based on high-speed optical communications technology. Two DUs - 720 and 730 - are shown in Figure 7, but this number is only exemplary. Each of DUs 720 and 730 are implemented on virtualized computing hardware, including respective processing systems (e.g., BBUs) 725 and 735 that implement processing for lower radio protocol layers, such as PHY/L1 and MAC/L2. DUs implemented in this manner can be referred to as virtualized DUs (vDUs). Conventionally, such BBUs are purpose-built using specialized, vendor-proprietary hardware platforms to meet the hard real-time requirements of lower protocol layers in wireless networks.

Each vDU also communicates with a plurality of radio units (RUs), each of which contains transceivers, antennas, etc. that provide the NR (and optionally LTE) radio interface in respective coverage areas (e.g., cells). For example, vDU 720 communicates with RUs 721-723 and vDU 730 communicates with RUs 731-733. vDU-RU communication can be based on the Common Public Radio Interface (CPRI) over high-speed optical communications technology.

To further reduce costs for network operators, it is desirable to migrate digital processing for lower protocol layers (e.g., PHY/L1 and MAC/L2) to cloud infrastructure based on COTS servers, processing units, and/or virtualization software. Efficient management of concurrent computation is challenging in general, and even more difficult when running 5G workloads on COTS. Scheduling of compute resources for processing of radio workload needs to be done such that all hard real-time deadlines are met while optimizing utilization of available hardware and software resources.

One current approach for scheduling radio workloads (e.g., streams of radio data) on computing resources is based on processes. These rely on an operating system (e.g., Linux) scheduler. The workload consists of multiple streams of radio data with varying requirements on compute capacity, timeliness, etc. Using different processes to handle different type of streams makes for a straightforward solution that leverages the OS capabilities and provides a flexible and scalable solution. Processes can be dynamically allocated to different processing units (e.g., cores, stream processors, etc.), which facilitates high utilization of available hardware. However, handling of processes requires significant computation and communication resources since data must be copied between user and kernel space.

Alternately, a kernel-bypass approach with static allocation of processing units can be used to address some of the drawbacks of the process-based approach. In the kernel-bypass approach, a portion of available processing units are not controlled and scheduled by the OS but instead provide raw compute capabilities. Each of these processing unit can process only one type of request and is associated with a queue of incoming packets (or streams). The processing units repeatedly query (or poll) their associated queues for new workload to process. The processing software running on these processing units are subject to very low communication overhead and can thus provide low latency processing.

A drawback of the kernel-bypass approach is statically-assigned processing units cannot be dynamically configured and/or reallocated to match changes in workload. For example, it is not possible and/or feasible to increase the number (or portion) of processing units handling a given type of workload if needed. This leads to poor utilization and lower-than-desirable capacity. Furthermore, all processing units must continually poll their queues, such that they are running even when there is no workload to process. This leads to increased energy consumption and unnecessary costs.

Even though COTS components are continually improving, they still lack the capability to support hard real-time requirements on small time scales found in 5G L1/L2 processing. For example, graphics processing units (GPUs) typically include a large number of stream (or vector) multiprocessors that have very high raw computing capabilities. However, GPUs are optimized processing at video frame rates such as 60 Hz, 120 Hz, etc. In contrast, 5G L1/L2 real-time processing demands occur at the following rates, which can be much higher than video rates:
- Symbol rates (e.g., 8-35 µs or 30-120 kHz), e.g., based on prioritization of PDCCH to be sent on symbols 0-1 of a 14-symbol slot.
- Slot rates (0.125-1 ms or 1-8 kHz), e.g., based on data traffic such as in a time-division duplexing (TDD) pattern. For instance, a typical TDD pattern in a cell will include four DL slots followed by one UL slot. While DL slots must be processed within a slot time, UL slot processing can be more relaxed (e.g., within 2+ slots).
- Multi-slot rate (1-10ms or 10-100 Hz), e.g., based on channels or signals that do not require immediate processing, such as PRACH or SRS.

Accordingly, improvements are needed to be able to use COTS hardware and software for 5G L1/L2 processing, such as new techniques for determining resource needs and scheduling computing resources for such processing.

Exemplary embodiments of the present disclosure address these and other problems, issues, and/or difficulties by providing a flexible application-aware resource scheduler that takes advantage of 5G- and RAN-specific information to allocate processing resource according to user traffic load, scheduling of physical signals and channels, cell configurations, etc. This scheduler can be referred to as a L1 (or PHY) Task Resource Scheduler (TRS). By incorporating such information into scheduling of processing resources, the TRS can provide superior performance relative to generic task schedulers, both in terms of meeting hard real-time deadlines associated with PHY processing and in terms of better utilization of the underlying hardware. Such improved performance facilitates use of COTS processing hardware and software for 5G baseband processing, which can provide a more competitive product (e.g., DU) in terms of cost, energy efficiency, etc.

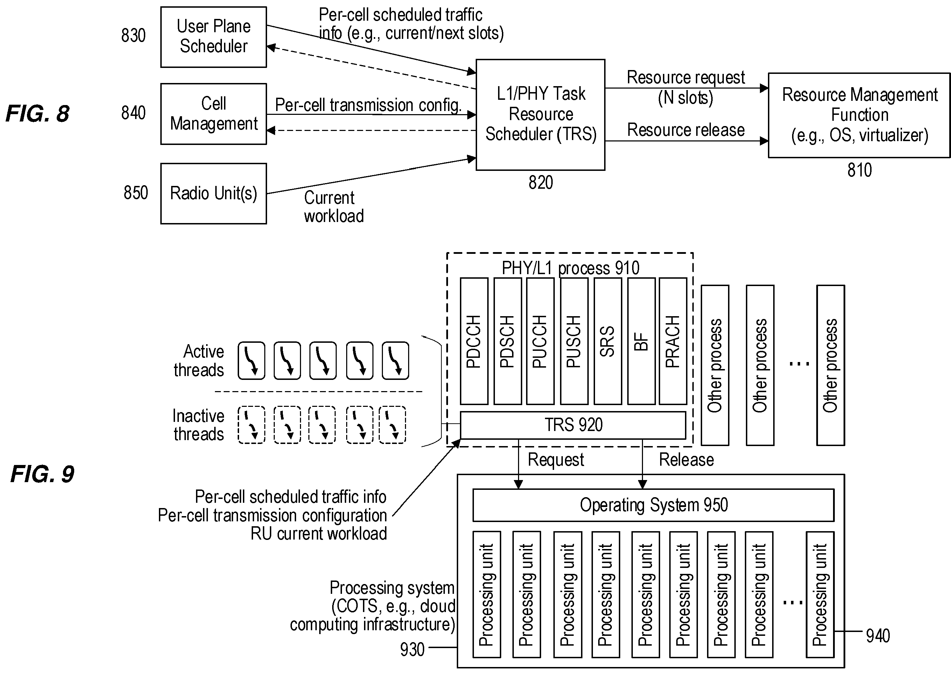

Figure 8 is a block diagram of an exemplary system that includes an embodiment of the TRS. In Figure 8, L1/PHY TRS 820 receiving inputs from the following functions in a 5G network:
- User Plane Scheduler 830 (e.g., MAC-layer scheduler) provides information about user data traffic scheduled for transmission or reception in the one or more cells. For example, User Plane Scheduler 830 can indicate which physical channels (e.g., PDCCH, PDSCH, PUCCH, PUSCH) or signals (e.g., SRS) are scheduled during a current and/or next slot (or transmission time interval, TTI). This information provides the near-instantaneous load of the system. In general, however, the rate of change of such information can be very frequent, such that basing processing resource allocation/deallocation decisions primarily on it will result in excessive overhead due to changing and/or reconfiguring available processing resources. Furthermore, the instantaneous load will vary across cells such that, at any particular time, one cell may be heavily loaded while others have little load.
- Cell Management 840 provides information about transmission configurations of the various cells, e.g., TDD UL/DL configuration within each slot, symbol and/or slot timing offsets relative to an absolute reference, etc. In general, this information is semi-static but can have a significant impact on the demand for processing resources. As such, the TRS can used this information to anticipate processing demand in upcoming time intervals (e.g., next N slots) and notify a processing resource management function (e.g., OS, virtualizer, etc.) sufficiently in advance of anticipated demand.
- Radio Units (RUs) 850 provide information regarding their respective current workloads and, thus, abilities to handle late packets. In general, RUs have very little elasticity due to limited memory and processing resources. Thus, it is critical that DL data arrive is provided to RUs early enough to meet transmission schedules. If the BB processing unit (e.g., in the vDU) becomes heavily loaded due to insufficient processing resources to meet demand, this could cause late delivery of DL data to an RU and increase the probability of a missed transmission schedule.

Based on these inputs, the TRS can determine a specific deadline for each workload and predict and/or estimate processing resource demand in upcoming time intervals (e.g., next N slots). Accordingly, the TRS can notify a processing resource management function 810 (e.g., OS, virtualizer, etc.) sufficiently in advance to facilitate actual allocation of the needed processing resources to meet hard real-time deadlines for L1/L2 processing, while avoiding over-dimensioning of the system to account for peak demands (as traditionally done in purpose-built systems). This notification can be in the form of a resource request, resource release, resource allocation request, resource deallocation request, etc. In some cases, the resource management function may respond to such a notification, e.g., with an acknowledgement or confirmation of the allocation, an indication of an error condition that prevents the allocation, etc.

In general, the frequency or rate of resource allocation and deallocation of computing resources is far lower than changes in the instantaneous traffic demands. This is because embodiments of the TRS use predictive techniques to anticipate future resource requirements based on current and past information. In other words, according to the principles of these embodiments, resources will not be allocated simply based on instantaneous demand (e.g., when queues are full) but based on demand predicted based cell configuration, current and past traffic load, RU workload or processing margin, etc. As such, the TRS may sometimes request allocation of more resources than needed in a particular slot, but still lower than if the system would have been overprovisioned for peak traffic demand as done conventionally.

The processing resource estimation (or prediction) algorithm can be implemented in various ways, such as by auto-regressive (AR) filters, moving-average (MA) filters, ARMA filters, rule-based systems, artificial intelligence (AI), machine learning (ML), etc. An exemplary processing resource estimation function is given below, where the output P expresses the processing resource demand (e.g., in processing units, threads, cores, etc.) for the next N slots (e.g., the latency or delay for processing resource allocation): $P = C ∗ {n}_{cell} + {\sum }_{i = 1}^{{n}_{cell}} {\sum }_{j = 1}^{{n}_{chan}} \left({cost}_{j}∗{load}_{i , j}\right) ∗ {R}_{i} ,$ where:
- *n_{cell}* = number of cells handled by TRS;
- *n_{chan}* = number of channels or signals per cell;
- *Rᵢ* = radio latency factor (e.g., processing boost) for cell *i*, based on reported workload for RU providing cell *i*;
- *costⱼ* = processing resources consumed per unit of traffic (e.g., PRB, MCS, function of PRB and MCS, etc.) for channel or signal *j*;
- *load_{i,j}* = number of traffic units (e.g., PRBs) for channel or signal *j* in cell *i* (e.g., variable according to TDD pattern); and
- C = minimum per-slot processing resource allocation for each cell (e.g., safety margin).

In some embodiments, each factor *load_{i,j}* can be an average over a particular number (e.g., M) of most recent subframes. This can be considered a moving average (MA) filter and can be computed using equal weights for each of the M subframes, or by assigning a weight (or coefficient) to each subframe based on its recency (e.g., more recent subframes are weighted more heavily).

In some embodiments, the output P for a particular N slots can be averaged with previous outputs P for a particular number (e.g., M) of most recent durations of N slots. This can be considered an autoregressive (AR) filter and can be computed using equal weights for each of the N-slot durations, or by assigning a weight (or coefficient) to each N-slot duration based on its recency (e.g., more recent durations are weighted more heavily) and/or on other considerations. For example, known techniques can be used to find AR prediction coefficients based on historical load input data.

In some embodiments, scheduling of radio resources (e.g., in multiple cells) can be based on, or influenced by, TRS estimation of processing resource demand. This is illustrated in Figure 8 by the dashed lines running from TRS 820 to User Plane Scheduler 830 and Cell Management 840. For example, TRS 820 can feedback information concerning processing resource needs for current and/or recent past schedule of user data traffic to User Plane Scheduler 830, which can use such information to adapt future resource scheduling (e.g., varying time-frequency scheduling of PDSCH, PDCCH, etc.) to better align with processing resource availability. Similarly, TRS 820 can feedback information about processing resource needs for current transmission timing in multiple cells to Cell Management 830, which can adapt TDD pattern, slot 0 timing, etc. to better align with processing resource availability.

Figure 9 is a block diagram of an exemplary system that includes an embodiment of the TRS. Figure 9 includes a processing system 930, which can correspond to processing systems 725 and 735 shown in respective vDUs 720 and 730 in Figure 7. Processing system 930 includes operating system (OS) 950 that manages a plurality of processing units 940; these can be COTS components such as x86 processors (or x86-based boards/units) and Linux OS.

A PHY/L1 process 910 runs on processing system 930. For example, this process can handle the 5G baseband processing such as currently performed in DUs, vDUs, and/or BBUs. PHY/L1 process 910 includes a plurality of queues, each holding different kinds of 5G workloads waiting to be processed. For example, Figure 9 shows different queues for PDCCH, PDSCH, PUCCH, PUSCH, SRS, beamforming (BF), and PRACH. Other queues may be added as necessary. TRS 920 is responsible for selecting next item to be processed at least partially based on the inputs discussed above in relation to Figure 8, which are also shown in Figure 9.

Figure 9 shows various "other processes" running on processing system 910. These can include, for example, workload for various applications (e.g., IoT) that are advantageously run at the "edge" of the 5G network. Notably these "other processes" are managed directly by OS 950 rather than TRS 920.

TRS 920 creates one or more worker threads for each queue/workload type depending on the amount of processing required. These worker threads can be considered "virtualized processors" from the viewpoint of the PHY/L1 process. TRS 920 predicts or estimates future workload based on the inputs, and from that can determine when threads can be moved from active state to idle state (e.g., yielded back to OS 950) until they need to be re-activated again. These actions by TRS free up physical processing units for other types of workloads in PHY/L1 process 910, as well as for the other processes. The latency for changing thread state change is generally lower than the latency for creating and destroying threads. Furthermore, even if changing thread state is too slow for certain real-time deadlines (e.g., symbol time), TRS 920 can ensure that there are enough active threads to address such time-sensitive deadlines.

As discussed above, TRS 920 can notify OS 950 sufficiently in advance to facilitate actual allocation of the needed processing units 940 to meet hard real-time deadlines for PHY/L1 processing, while avoiding over-dimensioning of processing resources to account for peak demands (as traditionally done in purpose-built systems). In Figure 9, this notification is shown as a resource request and a resource release.

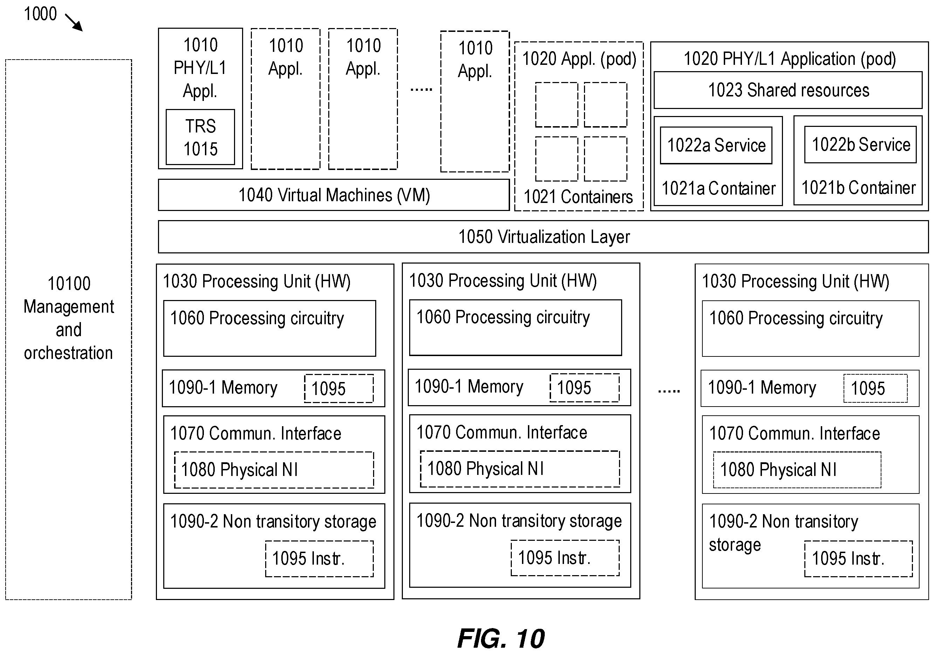

Figure 10 is a block diagram of another exemplary system that includes an embodiment of the TRS. In Figure 10, functions are implemented as virtual components executed by one or more virtual machines in virtual environment 1000 hosted by a plurality of processing units 1030. Such processing can be computing machines arranged in a cluster (e.g., such as in a data center or customer premise equipment (CPE)) where many hardware nodes work together and are managed via management and orchestration (MANO) function 10100, which, among others, oversees lifecycle management of various applications 1010 and/or 1020. In some embodiments, however, such virtual components can be executed by one or more physical computing machines, e.g., without (or with less) virtualization of the underlying resources of processing units 1030.

Processing units 1030 are preferably COTS units, such as graphics processing units (GPUs), rack-mounted x86 server boards, reduced instruction-set computer (RISC, e.g., ARM) boards, etc. Each processing unit 1030 can include processing circuitry 1060 and memory 1090. Memory 1090 can include non-persistent memory 1090-1 (e.g., for permanent or semi-permanent storage) and persistent memory 1090-2 (e.g., for temporary storage), each of which can store instructions 1095 (also referred to as software or computer program product).

Memory 1090 can store instructions 1095 executable by processing circuitry 1060 whereby various applications 1010 and/or 1020 can be operative for various features, functions, procedures, etc. of the embodiments disclosed herein. For example, instructions 1095 can include program instructions that, when executed by processing circuitry 1060, can configure processing unit 1030 to perform operations corresponding to the methods or procedures described herein, including those related to embodiments of the TRS.

Memory 1090 can also store instructions 1095 executable by processing circuitry 1060 to instantiate one or more virtualization layers 1050 (also referred to as hypervisor or virtual machine monitor, VMM). In some embodiments, virtualization layer 1050 can be used to provide a plurality of virtual machines (VMs) 1040 that are abstracted from the underlying processing units 1030. For example, virtualization layer 1050 can present a virtual operating platform that appears like computing hardware to containers and/or pods hosted by environment 1000. Moreover, each VM (e.g., as facilitated by virtualization layer 1050) can manifest itself as a software implementation of a physical machine that runs programs as if they were executing on a physical, non-virtualized machine. Each VM can have dedicated processing units 1030 or can share resources of one or more processing units 1030 with other VMs.

Memory 1090 can store software to execute each VM 1040 as well as software allowing a VM 1040 to execute functions, features and/or benefits described in relation with some embodiments described herein. VMs 1040 can include virtual processing, virtual memory, virtual networking or interface and virtual storage, and can be run by virtualization layer 1050. As shown in Figure 10, various applications 1010 can run on VMs 1040. One such application is PHY/L1 application 1010, which can include TRS 1015. These can correspond to similarly-named features discussed above in relation to Figures 8-9.

As a specific example, applications 1010 can be implemented in WebAssembly, a binary instruction format designed as a portable compilation target for programming languages. In other words, virtualization layer 1050 can provide VMs 1040 that are capable of running applications, such as PHY/L1 application 1010, that are compiled into WebAssembly executables. As another specific example, virtualization layer 1050 can provide Java VMs 1040 that are capable of running applications (e.g., PHY/L1 application 1010) written in the Java programming language or written in other programming languages and compiled into Java byte code.

In other embodiments, virtualization layer 1050 can host various applications 1020 arranged in pods. Each pod can include one or more containers 1021, such as 1021a-b shown for a particular application 1020 in Figure 10. Container 1021a-b can encapsulate respective services 1022a-b of a particular application 1020. For example, a "pod" (e.g., a Kubernetes pod) can be a basic execution unit of an application, i.e., the smallest and simplest unit that can be created and deployed in environment 1000. Each pod can include a plurality of resources shared by containers within the pod (e.g., resources 1023 shared by containers 1021a-b). For example, a pod can represent processes running on the processing units (or VMs) and can encapsulates an application's containers (including services therein), storage resources, a unique network IP address, and options that govern how the container(s) should run. In general, containers can be relatively decoupled from underlying physical or virtual computing infrastructure. One such application is PHY/L1 application 1020, which can be arranged as a pod with various containers 1021a-b, services 1022a,b, etc. In some embodiments, the TRS can be implemented as one of the services in the PHY/L1 application pod.

Note that in Figure 10, the PHY/L1 application (including TRS) is shown as two alternatives: pod-based and VM-based. However, it is possible that the PHY/L1 application can be implemented based on one of the alternatives while other applications can be implemented on the same underlying processing units according to the other alternative. In other words, virtualization layer 1050 may be capable of providing VMs for execution of certain applications and supporting pod-based execution of other applications.

Processing circuitry 1060 can include general-purpose or special-purpose hardware devices, such as one or more Intel x86-family processors (or equivalent), reduced instruction-set computing (RISC) processors (e.g., ARM), stream or vector multiprocessors, application-specific integrated circuits (ASICs), or any other type of processing circuitry including digital or analog hardware components. Each processing unit 1030 can include one or more high-speed communication interfaces 1070, each of which can include a physical network interface 1080. The respective communication interfaces 1070 can be used for communication among the processing units 1030, and/or with other computing hardware internal and/or external to system 1000.

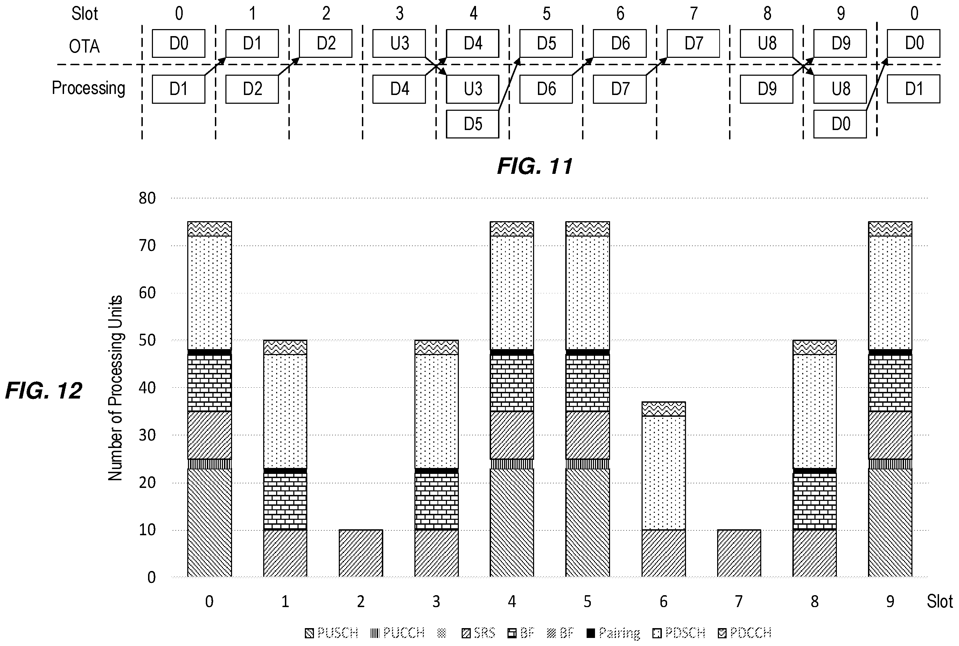

Figure 11 shows an exemplary timing diagram illustrating baseband processing (e.g., by DU/vDU/BBU) for a cell configured for time-division duplexing (TDD). In particular, Figure 11 illustrates how various signals and channels used in the cell consume processing resources in a very uneven manner due to the TDD pattern. In Figure 11, the subframe TDD pattern is three DL slots (starting in slot 0), one UL slot, four DL slots, one UL slot, and one DL slot. For example, label "D0" indicates DL in slot 0, label "U3" indicates UL in slot 3, etc.

For a particular DL slot, the baseband processing must be completed during the slot before the particular DL slot is transmitted over the air (OTA). For a particular UL slot, the baseband processing must be completed during the slot after the particular UL slot is received OTA. These relationships are illustrated by the arrows. As can be seen in Figure 11, the amount of processing required is not uniform across slots. For example, no processing of UL or DL is required during slots 2 and 7, while processing of both UL and DL is required in slots 4 and 9.

Figure 12 is a bar graph illustrating the per-slot requirement of processing resources for the TDD arrangement shown in Figure 11. The resource requirements are given in terms of processing units of an exemplary processing system that, in some instances, could be either of those shown in Figures 9-10. The bar graph shows the per-slot resource requirement for each PHY/L1 process used in the cell, including PUSCH, PUCCH, SRS, beamforming (BF), beam pairing, PDCCH, and PDSCH.

As shown in Figure 12, the resource requirement for the TDD arrangement of Figure 11 ranges from 10 to 75 processing units per slot - a very wide range. Given knowledge of this cell's TDD arrangement and some knowledge of user traffic scheduling, the TRS can estimate and/or predict the per-slot resource requirement sufficiently in advance of the allocation and/or scheduling latency of the processing resource management function (e.g., OS or virtualization layer).

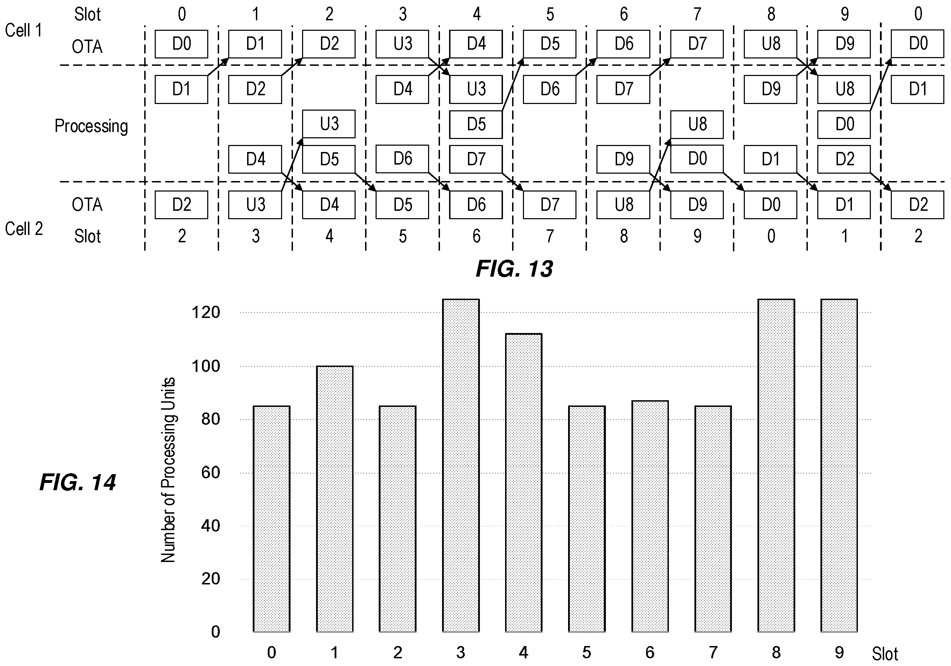

As mentioned above, in some embodiments scheduling of radio resources can be based on, or influenced by, TRS estimation of processing resource demand. For example, the TRS can feedback information about processing resource needs for current transmission timing in multiple cells to a cell management function (e.g., 830), which can adapt TDD pattern, slot 0 timing, etc. for one or more cells whose processing resources are managed by the TRS. Figure 13 shows an exemplary timing diagram illustrating baseband processing (e.g., by DU/vDU/BBU) for two cells configured with the same TDD pattern as shown in Figure 11. These two cells could be provided by a single RU or by multiple RUs connected to a common DU/vDU, which provides a common set of processing resources (e.g., BBU) for the two cells. Additionally, the TDD pattern for the cells has been shifted such that slot 0 for cell 1 aligns with slot 2 for cell 2.

Although the processing resources required for the two cells is not uniform across slots, the shifting of slot 0 serves to reduce the amount of variation. Figure 14 is a bar graph illustrating the per-slot requirement of processing resources for the TDD arrangement shown in Figure 13. As can be seen from Figure 14, the number of processing units required varies between approximately 85 and 125 per slot. In contrast, if slot 0 was aligned for both cells, the per-slot processing resource requirements would be double those shown in Figure 11, i.e., between 20 and 150 per slot.

The principles illustrated by Figures 13-14 can be extended to additional cells and additional processing resources, shifting slot 0 alignment as needed to make the per-slot processing resource requirements more uniform. As an example, cells 3 and 4 can be arranged such that their slots 3 and 5, respectively, align with slot 0 of cell 1.

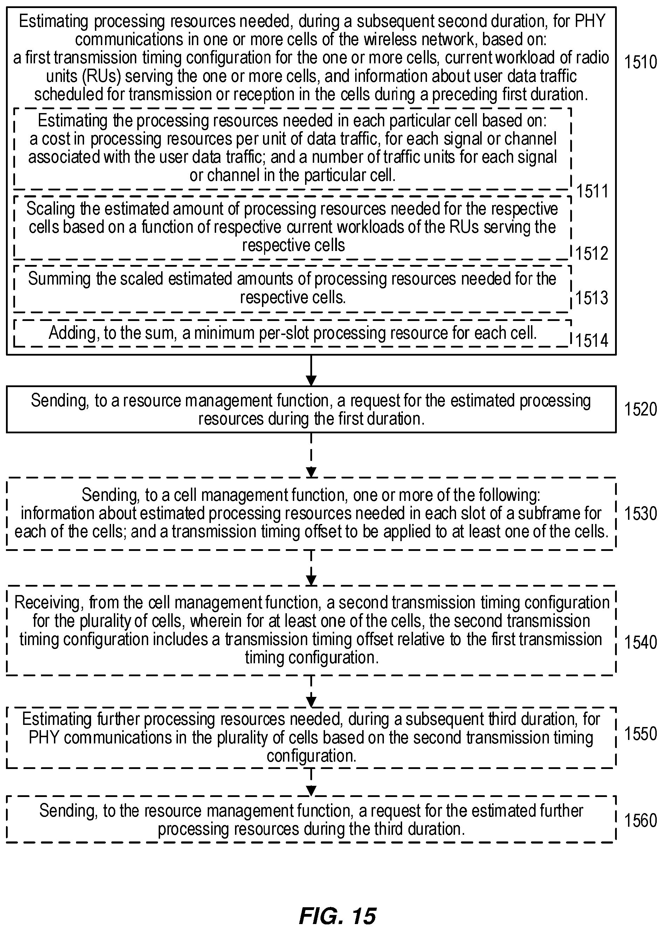

The embodiments described above can be further illustrated by the exemplary method (e.g., procedure) for scheduling processing resources for physical layer (PHY) communications in a wireless network shown in Figure 15. For example, the claimed method shown in Figure 15 is performed by a task resource scheduler (TRS) that is communicatively coupled to a resource management function for the processing resources (e.g., physical or virtual processing units), such as described herein with reference to other figures. Although the method is illustrated in Figure 15 by specific blocks in a particular order, the operations corresponding to the blocks can be performed in different orders than shown and can be combined and/or divided into blocks and/or operations having different functionality than shown. Optional blocks and/or operations are indicated by dashed lines.

The method includes the operations of block 1510, in which the TRS estimates processing resources needed, during a subsequent second duration, for PHY communications in one or more cells of the wireless network. The estimate is based on:
- a first transmission timing configuration for the one or more cells,
- current workload of radio units (RUs) serving the one or more cells, and
- information about user data traffic scheduled for transmission or reception in the one or more cells during a first duration, which precedes the second duration by at least a scheduling delay associated with the processing resources.
The method also includes the operations of block 1520, in which the TRS sends, to a resource management function, a request for the estimated processing resources during the second duration.

In some embodiments, the processing resources comprise a plurality of commercial off-the-shelf (COTS) processing units, the resource management function is an operating system (OS) or a virtualization layer executing on the processing units, and TRS also executes on the processing units. In some embodiments, the first transmission timing configuration can be received from a cell management function in the wireless network, the current workload can be received from the respective radio units (RUs), and information about user data traffic scheduled can be received from a user plane scheduler in the wireless network. An example is shown in Figure 8.

In some embodiments, for each cell, the first transmission timing configuration includes one or more of the following: time-division duplexing (TDD) configuration of a plurality of slots in each subframe; relative or absolute timing of an initial slot in each subframe; and relative or absolute timing of an initial symbol in each slot.

In some embodiments, the first duration includes a plurality of slots and the request is sent at least the scheduling delay before the second duration. In some embodiments, the second duration is based on hard real-time deadlines associated with the transmission or reception in the one or more cells by the RUs.

In some embodiments, the first duration includes one or more subframes. In such embodiments, the information about user data traffic includes traffic load for each of the following channels or signals during each of the one or more subframes: physical uplink control channel (PUCCH), physical uplink shared channel (PUSCH), physical downlink control channel (PDCCH), physical downlink shared channel (PDSCH), and sounding reference signals (SRS). In some of these embodiments, each subframe includes a plurality of slots and the information about user data traffic includes traffic load for each of the signals or channels during each of the plurality of slots (i.e., in each subframe). In some of these embodiments, the information about user data traffic also includes requirements during each of the one or more subframes for beam forming and/or beam pairing associated with the user data traffic.

In some embodiments, estimating the processing resources needed (e.g., in block 1510) can be further based on information about user data traffic scheduled for transmission or reception in the one or more cells during a plurality of durations before the first duration. This is exemplified by a moving average (MA) filter. In other embodiments, estimating the processing resources needed can be further based on estimated processing resources needed during a plurality of durations before the second duration. This is exemplified by an autoregressive (AR) filter. Combinations of these embodiments are also possible, e.g., an ARMA filter.

In some embodiments, estimating the processing resources needed (e.g., in block 1510) can include the operations of sub-block 1511, where the TRS can estimate the processing resources needed in each particular cell based on a cost in processing resources per unit of data traffic for each signal or channel associated with the user data traffic; and a number of traffic units for each signal or channel in the particular cell. This is exemplified by factors *costⱼ* and *load_{i,j}* discussed above. In some embodiments, estimating the processing resources needed can also include the operations of sub-block 1512, where the TRS can scale the estimated amount of processing resources needed for the respective cells based on a function of respective current workloads of the RUs serving the respective cells. This is exemplified by factor Ri discussed above.

In some embodiments, estimating the processing resources needed (e.g., in block 1510) can also include the operations of sub-blocks 1513-1514. In sub-block 1513, the TRS can sum the scaled estimated amounts of processing resources needed for the respective cells. In sub-block 1514, the TRS can add to the sum a minimum per-slot processing resource for each cell. This is exemplified by factor *C* · *n_{cell},* discussed above.

In some embodiments, the one or more cells can include a plurality of cells and the exemplary method can also include the operations of block 1530, where the TRS can send, to a cell management function, one or more of the following:
- information about estimated processing resources needed in each slot of a subframe for each of the cells; and
- a transmission timing offset to be applied to at least one of the cells.

In some of these embodiments, the exemplary method can also include the operations of blocks 1540-1560. In block 1540, the TRS can receive, from the cell management function, a second transmission timing configuration for the plurality of cells. For at least one of the cells, the second transmission timing configuration can include a transmission timing offset (e.g., some number of slots) relative to the first transmission timing configuration. In block 1550, the TRS can estimate further processing resources needed, during a subsequent third duration, for PHY communications in the plurality of cells based on the second transmission timing configuration. In block 1560, the TRS can send, to the resource management function, a request for the estimated further processing resources during the third duration.

In some of these embodiments, the further processing resources have reduced variation across slots of a subframe relative to the processing resources estimated based on the first transmission timing configuration. An example is shown in Figure 14.

Although Figure 15 describes a method (e.g. procedure), the operations corresponding to the method (including any blocks and sub-blocks) can also be embodied in a task resource scheduler (TRS) configured to schedule processing resources for physical layer (PHY) communications in a wireless network. More specifically, the TRS can be further configured to perform operations corresponding to the method of Figure 15

Additionally, the operations corresponding to the method (including any blocks and sub-blocks) can also be embodied in a non-transitory, computer-readable medium storing computer-executable instructions. The operations corresponding to the method (including any blocks and sub-blocks) can also be embodied in a computer program product storing computer-executable instructions. In either case, when such instructions are executed by processing circuitry associated with a TRS, they can configure the TRS to perform operations corresponding to the method of Figure 15.

Similarly, embodiments can also include a processing system for PHY communications in the wireless network. The exemplary processing system can include a plurality of processing units and one or more memories storing executable instructions corresponding to the TRS and a resource management function arranged to allocate the processing units for software tasks associated with the PHY communications. An example is illustrated by Figure 10. Execution of the instructions by the processing units configures the TRS to perform operations corresponding to the method of Figure 15.

In various embodiments of the processing system, the processing units can be any of the following: graphics processing units (GPUs); Intel x86 processors or equivalent; or reduced instruction set computing (RISC) processors (e.g., ARM processors). In various embodiments of the processing system, the resource management function can be a virtualization layer or an operating system. Examples are shown in Figures 9-10. In some embodiments of the processing system, the processing units and the resource management function can be commercial off-the-shelf (COTS) components.

In some embodiments, such a processing system can also be part of a wireless network comprising one or more virtualized distributed units (vDUs) and a plurality of radio units (RUs), each serving one or more cells. Each vDU can include the processing system and can be communicatively coupled to a different portion of the RUs (i.e., than other vDUs). An example is shown in Figure 7.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (e.g., "data" and "information"). It should be understood, that although these terms (and/or other terms that can be synonymous to one another) can be used synonymously herein, there can be instances when such words can be intended to not be used synonymously.

## Claims

1. A method for scheduling processing resources in a wireless network for the execution of physical layer, PHY, processing tasks of a Baseband Unit, BBU, the method comprising:
estimating (1510) processing resources needed, during a subsequent second duration, for PHY communications in one or more cells of the wireless network, based on:
a first transmission timing configuration for the one or more cells,
current workload of radio units, RUs, serving the one or more cells, and
information about user data traffic scheduled for transmission or reception in the one or more cells during a first duration, which precedes the second duration by at least a scheduling delay associated with the processing resources; and
sending, to a resource management function, a request for the estimated processing resources during the second duration.

2. The method of claim 1, wherein, for each cell, the first transmission timing configuration includes one or more of the following:
time-division duplexing configuration of a plurality of slots in each subframe;
relative or absolute timing of an initial slot in each subframe; and
relative or absolute timing of an initial symbol in each slot.

3. The method of any of claims 1-2, wherein:
the first duration includes a plurality of slots, and
the request is sent at least the scheduling delay before the second duration.

4. The method of any of claims 1-3, wherein the second duration is based on hard real-time deadlines associated with the transmission or reception in the one or more cells by the RUs.

5. The method of any of claims 1-4, wherein:
the first duration includes one or more subframes; and
the information about user data traffic includes traffic load for each of the following channels or signals during each of the one or more subframes:
physical uplink control channel, PUCCH;
physical uplink shared channel, PUSCH;
physical downlink control channel, PDCCH;
physical downlink shared channel, PDSCH; and
sounding reference signals, SRS.

6. The method of claim 5, wherein the information about user data traffic also includes requirements during each of the one or more subframes for one or more of the following associated with the user data traffic: beam forming and beam pairing.

7. The method of any of claims 1-6, wherein estimating (1510) the processing resources needed is further based on one of the following:
information about user data traffic scheduled for transmission or reception in the one or more cells during a plurality of durations before the first duration; or
estimated processing resources needed during a plurality of durations before the second duration.

8. The method of any of claims 1-7, wherein estimating (1510) the processing resources needed comprises estimating (1511) the processing resources needed in each particular cell based on:
a cost in processing resources per unit of data traffic, for each signal or channel associated with the user data traffic; and
a number of traffic units for each signal or channel in the particular cell.

9. The method of any of claims 1-8, wherein:
the one or more cells include a plurality of cells; and
the method further comprises sending (1530), to a cell management function, one or more of the following:
information about estimated processing resources needed in each slot of a subframe for each of the cells; and
a transmission timing offset to be applied to at least one of the cells.

10. The method of claim 9, further comprising:
receiving (1540), from the cell management function, a second transmission timing configuration for the plurality of cells, wherein for at least one of the cells, the second transmission timing configuration includes a transmission timing offset relative to the first transmission timing configuration;
estimating (1550) further processing resources needed, during a subsequent third duration, for PHY communications in the plurality of cells based on the second transmission timing configuration; and
sending (1560), to the resource management function, a request for the estimated further processing resources during the third duration.

11. A processing system (725, 735, 930, 1000) for scheduling processing resources in a wireless network (199, 299, 700) for the execution of physical layer, PHY, processing tasks of a Baseband Unit, BBU, the processing system including:
a plurality of processing units (940, 1030); and
one or more memories (1090) storing executable instructions corresponding to:
a resource management function (950, 1050) arranged to allocate the processing units for software tasks associated with the PHY communications; and
a PHY task resource scheduler, TRS (820, 920, 1015, 1022),
wherein execution of the instructions by the processing units configures the TRS to:
estimate processing resources needed, during a subsequent second duration, for PHY communications in one or more cells of the wireless network, based on:
a first transmission timing configuration for the one or more cells,
current workload of radio units, RUs, serving the one or more cells, and
information about user data traffic scheduled for transmission or reception in the one or more cells during a first duration, which precedes the second duration by at least a scheduling delay associated with the processing resources; and
send, to a resource management function, a request for the estimated processing resources during the second duration.

12. The processing system of claim 11, wherein execution of the instructions by the processing units further configures the TRS to perform operations corresponding to any of the methods of claims 2-10.

13. A wireless network (199, 299, 700) comprising:
a plurality of radio units, RUs (721-723, 731-733), each serving one or more cells in the wireless network; and
one or more virtualized distributed units, vDUs (720, 730), wherein:
each vDU is communicatively coupled to a different one or more of the RUs; and
each vDU includes the processing system (725, 735, 930, 1000) of any of claims 11-12.

14. A task resource scheduler, TRS (820, 920, 1015, 1022) configured to schedule processing resources in a wireless network (199, 299, 700) for the execution of physical layer, PHY, processing tasks of a baseband Unit, BBU, the TRS being further configured to:
estimate processing resources needed, during a subsequent second duration, for PHY communications in one or more cells of the wireless network, based on:
a first transmission timing configuration for the one or more cells,
current workload of radio units, RUs, serving the one or more cells, and
information about user data traffic scheduled for transmission or reception in the one or more cells during a first duration, which precedes the second duration by at least a scheduling delay associated with the processing resources; and
send, to a resource management function, a request for the estimated processing resources during the second duration.

15. The TRS of claim 14, being further configured to perform operations corresponding to any of the methods of claims 2-10.

## Patentansprüche

1. Verfahren zur Planung von Verarbeitungsressourcen in einem drahtlosen Netzwerk zur Ausführung von Verarbeitungsaufgaben der physikalischen Schicht, PHY, einer Basisband-Einheit, BBU, wobei das Verfahren umfasst:
Schätzen (1510) der Verarbeitungsressourcen, die während einer anschließenden zweiten Zeitdauer für die PHY-Kommunikation in einer oder mehreren Zellen des drahtlosen Netzwerks benötigt werden, basierend auf:
einer ersten Übertragungszeitschaltkonfiguration für die eine oder mehrere Zellen, der aktuellen Arbeitslast von Funkeinheiten, RUs, die die eine oder mehreren Zellen bedienen, und Informationen über den Nutzerdatenverkehr, der während einer ersten Zeitdauer, die der zweiten Zeitdauer um mindestens eine mit den Verarbeitungsressourcen verbundene Planungsverzögerung vorausgeht, in der einen oder den mehreren Zellen zur Übertragung oder zum Empfang eingeplant ist; und
Senden, an eine Ressourcenverwaltungsfunktion, einer Anfrage nach den geschätzten Verarbeitungsressourcen während der zweiten Zeitdauer.

2. Verfahren nach Anspruch 1, wobei die erste Übertragungszeitschaltkonfiguration für jede Zelle eine oder mehrere der folgenden beinhaltet:
Zeitduplexkonfiguration einer Vielzahl von Slots in jedem Teilrahmen;
relative oder absolute Zeitschaltung eines Anfangs-Slots in jedem Teilrahmen; und
relative oder absolute Zeitschaltung eines Anfangssymbols in jedem Slot.

3. Verfahren nach einem der Ansprüche 1-2, wobei:
die erste Zeitdauer eine Vielzahl von Slots beinhaltet und
die Anfrage mindestens die Planungsverzögerung vor Beginn der zweiten Zeitdauer gesendet wird.

4. Verfahren nach einem der Ansprüche 1-3, wobei die zweite Zeitdauer auf harten Echtzeit-Fristen basiert, die mit der Übertragung oder dem Empfang in der einen oder den mehreren Zellen durch die RUs verbunden sind.

5. Verfahren nach einem der Ansprüche 1-4, wobei:
die erste Zeitdauer einen oder mehr Teilrahmen beinhaltet; und
die Informationen über den Nutzerdatenverkehr die Verkehrslast für jeden der folgenden Kanäle oder Signale während jedes der einen oder mehreren Teilrahmen beinhalten:
physikalischen Aufwärtsstrecken-Steuerkanal, PUCCH;
physikalischen gemeinsamen Aufwärtsstrecken-Steuerkanal, PUSCH;
physikalischen Abwärtsstrecken-Steuerkanal, PDCCH;
physikalischen gemeinsamen Abwärtsstrecken-Steuerkanal, PDSCH; und
Sondierungsreferenzsignale, SRS.

6. Verfahren nach Anspruch 5, wobei die Informationen über den Nutzerdatenverkehr auch Anforderungen während jedes der einen oder mehreren Teilrahmen für eine oder mehrere der Folgenden umfassen, die mit dem Nutzerdatenverkehr verbunden sind: Strahlformung und Strahlpaarung.

7. Verfahren nach einem der Ansprüche 1-6, wobei das Schätzen (1510) der erforderlichen Verarbeitungsressourcen weiter auf einem der Folgenden basiert:
Informationen über den Nutzerdatenverkehr, der während einer Vielzahl von Zeitdauern vor der ersten Zeitdauer in der einen oder den mehreren Zellen zur Übertragung oder zum Empfang eingeplant ist; oder
geschätzte Verarbeitungsressourcen, die während einer Vielzahl von Zeitdauern vor der zweiten Zeitdauer benötigt werden.

8. Verfahren nach einem der Ansprüche 1-7, wobei das Schätzen (1510) der erforderlichen Verarbeitungsressourcen das Schätzen (1511) der erforderlichen Verarbeitungsressourcen in jeder bestimmten Zelle umfasst, basierend auf:
Kosten für die Verarbeitungsressourcen pro Datenverkehrseinheit für jedes Signal oder jeden Kanal, das bzw. der mit dem Nutzerdatenverkehr verbunden ist; und
eine Anzahl von Verkehrseinheiten für jedes Signal oder jeden Kanal in der bestimmten Zelle.

9. Verfahren nach einem der Ansprüche 1-8, wobei:
die eine oder mehrere Zellen eine Vielzahl von Zellen beinhalten; und
das Verfahren weiter das Senden (1530), an eine Zellenverwaltungsfunktion, eines oder mehrere der Folgenden umfasst:
Informationen über die geschätzten Verarbeitungsressourcen, die in jedem Slot eines Teilrahmens für jede der Zellen benötigt werden; und
ein Übertragungszeitschaltversatz, der auf mindestens eine der Zellen angewendet werden soll.

10. Verfahren nach Anspruch 9, weiter umfassend:
Empfangen (1540), von der Zellenverwaltungsfunktion, einer zweiten Übertragungszeitschaltkonfiguration für die Vielzahl von Zellen, wobei die zweite Übertragungszeitschaltkonfiguration für mindestens eine der Zellen einen Übertragungszeitschaltversatz relativ zur ersten Übertragungszeitschaltkonfiguration beinhaltet;
Schätzen (1550) weiterer Verarbeitungsressourcen, die während einer anschließenden dritten Zeitdauer für die PHY-Kommunikation in der Vielzahl von Zellen auf der Grundlage der zweiten Übertragungszeitschaltkonfiguration benötigt werden; und
Senden (1560), an die Ressourcenverwaltungsfunktion, einer Anfrage nach den geschätzten weiteren Verarbeitungsressourcen während der dritten Zeitdauer.

11. Verarbeitungssystem (725, 735, 930, 1000) zur Planung von Verarbeitungsressourcen in einem drahtlosen Netzwerk (199, 299, 700) zur Ausführung von Verarbeitungsaufgaben der physikalischen Schicht, PHY, einer Basisband-Einheit, BBU, wobei das Verarbeitungssystem beinhaltet:
eine Vielzahl von Verarbeitungseinheiten (940, 1030); und
einen oder mehrere Speicher (1090), die ausführbare Anweisungen speichern, die Folgendem entsprechen:
einer Ressourcenverwaltungsfunktion (950, 1050), die eingerichtet ist, um die Verarbeitungseinheiten den mit der PHY-Kommunikation verbundenen Softwareaufgaben zuzuweisen; und
einem PHY-Aufgabenressourcenplaner, TRS (820, 920, 1015, 1022), wobei die Ausführung der Anweisungen durch die Verarbeitungseinheiten den TRS für Folgendes konfiguriert:
Schätzen von Verarbeitungsressourcen, die während einer anschließenden zweiten Zeitdauer für die PHY-Kommunikation in einer oder mehreren Zellen des drahtlosen Netzwerks benötigt werden, basierend auf:
einer ersten Übertragungszeitschaltkonfiguration für die eine oder mehrere Zellen, der aktuellen Arbeitslast von Funkeinheiten, Rus, die die eine oder mehrere Zellen bedienen, und
Informationen über den Nutzerdatenverkehr, der während einer ersten Zeitdauer, die der zweiten Zeitdauer um mindestens eine mit den Verarbeitungsressourcen verbundene Planungsverzögerung vorausgeht, in der einen oder den mehreren Zellen zur Übertragung oder zum Empfang eingeplant ist; und
Senden, an eine Ressourcenverwaltungsfunktion, einer Anfrage nach den geschätzten Verarbeitungsressourcen während der zweiten Zeitdauer.

12. Verarbeitungssystem nach Anspruch 11, wobei die Ausführung der Anweisungen durch die Verarbeitungseinheiten den TRS weiter konfiguriert, um Operationen auszuführen, die einem der Verfahren nach den Ansprüchen 2 bis 10 entsprechen.

13. Drahtloses Netzwerk (199, 299, 700), umfassend:
eine Vielzahl von Funkeinheiten, RUs (721-723, 731-733), die jeweils eine oder mehrere Zellen im drahtlosen Netzwerk bedienen; und
eine oder mehrere virtualisierte verteilte Einheiten, vDUs (720, 730), wobei:
jede vDU ist kommunikativ mit einer oder mehreren anderen RUs verbunden; und
jede vDU beinhaltet das Verarbeitungssystem (725, 735, 930, 1000) nach einem der Ansprüche 11-12.

14. Aufgabenressourcenplaner, TRS, (820, 920, 1015, 1022), der konfiguriert ist, um Verarbeitungsressourcen in einem drahtlosen Netzwerk (199, 299, 700) für die Ausführung von Verarbeitungsaufgaben der physikalischen Schicht, PHY, einer Basisband-Einheit, BBU, zu planen, wobei der TRS weiter konfiguriert ist zum:
Schätzen von Verarbeitungsressourcen, die während einer anschließenden zweiten Zeitdauer für die PHY-Kommunikation in einer oder mehreren Zellen des drahtlosen Netzwerks benötigt werden, basierend auf:
einer ersten Übertragungszeitschaltkonfiguration für die eine oder mehrere Zellen, der aktuellen Arbeitslast von Funkeinheiten, RUs, die die eine oder mehreren Zellen bedienen, und Informationen über den Nutzerdatenverkehr, der während einer ersten Zeitdauer, die der zweiten Zeitdauer um mindestens eine mit den Verarbeitungsressourcen verbundene Planungsverzögerung vorausgeht, in der einen oder den mehreren Zellen zur Übertragung oder zum Empfang eingeplant ist; und
Senden, an eine Ressourcenverwaltungsfunktion, einer Anfrage nach den geschätzten Verarbeitungsressourcen während der zweiten Zeitdauer.

15. TRS nach Anspruch 14, der weiter konfiguriert ist, um Operationen auszuführen, die einem der Verfahren nach den Ansprüchen 2 bis 10 entsprechen.

## Revendications

1. Procédé de planification de ressources de traitement dans un réseau sans fil pour l'exécution de tâches d'un traitement de couche physique, PHY, d'une unité de bande de base, BBU, le procédé comprenant les étapes consistant à :
estimer (1510) des ressources de traitement nécessaires, pendant une deuxième durée ultérieure, pour des communications de PHY dans une ou plusieurs cellules du réseau sans fil, sur la base :
d'une première configuration de synchronisation de transmission destinée aux une ou plusieurs cellules, d'une charge de travail actuelle d'unités radio, RU, desservant les une ou plusieurs cellules, et d'informations relatives au trafic de données utilisateur planifié pour une transmission ou une réception dans les une ou plusieurs cellules pendant une première durée qui précède la deuxième durée d'au moins un retard de planification associé aux ressources de traitement ; et
envoyer, à une fonction de gestion de ressources, une demande relative aux ressources de traitement estimées pendant la deuxième durée.

2. Procédé selon la revendication 1, dans lequel, pour chaque cellule, la première configuration de synchronisation de transmission inclut un ou plusieurs des éléments suivants :
une configuration de duplexage par répartition dans le temps d'une pluralité de créneaux dans chaque sous-trame ;
une synchronisation relative ou absolue d'un créneau initial dans chaque sous-trame ; et
une synchronisation relative ou absolue d'un symbole initial dans chaque créneau.

3. Procédé selon l'une quelconque des revendications 1-2, dans lequel :
la première durée inclut une pluralité de créneaux, et
la requête est envoyée au moins pendant le retard de planification avant la deuxième durée.

4. Procédé selon l'une quelconque des revendications 1-3, dans lequel la deuxième durée est basée sur des délais stricts en temps réel associés à la transmission ou à la réception dans les une ou plusieurs cellules par les RU.

5. Procédé selon l'une quelconque des revendications 1-4, dans lequel :
la première durée inclut une ou plusieurs sous-trames ; et
les informations relatives au trafic de données utilisateur incluent la charge de trafic pour chacun des canaux ou signaux suivants pendant chacune des une ou plusieurs sous-trames :
un canal physique de commande de liaison montante, PUCCH ;
un canal physique partagé de liaison montante, PUSCH ;
un canal physique de commande de liaison descendante, PDCCH ;
un canal physique partagé de liaison descendante, PDSCH ; et
des signaux de référence de sondage, SRS.

6. Procédé selon la revendication 5, dans lequel les informations relatives au trafic de données utilisateur incluent également des exigences, au cours de chacune des une ou plusieurs sous-trames, pour un ou plusieurs des éléments suivants associés au trafic de données utilisateur : la formation de faisceaux et l'appariement de faisceaux.

7. Procédé selon l'une quelconque des revendications 1-6, dans lequel l'estimation (1510) des ressources de traitement nécessaires est en outre basée sur l'un des éléments suivants :
des informations relatives au trafic de données utilisateur planifié pour la transmission ou la réception dans les une ou plusieurs cellules pendant une pluralités de durées avant la première durée ; ou
l'estimation des ressources de traitement nécessaires pendant une pluralité de durées avant la deuxième durée.

8. Procédé selon l'une quelconque des revendications 1-7, dans lequel l'estimation (1510) des ressources de traitement nécessaires comprend l'estimation (1511) des ressources de traitement nécessaires dans chaque cellule particulière sur la base :
d'un coût en ressources de traitement par unité de trafic de données, pour chaque signal ou canal associé au trafic de données utilisateur ; et
d'un certain nombre d'unités de trafic pour chaque signal ou canal dans la cellule particulière.

9. Procédé selon l'une quelconque des revendications 1-8, dans lequel :
les une ou plusieurs cellules incluent une pluralité de cellules ; et
le procédé comprend en outre l'envoi (1530), à une fonction de gestion de cellule, d'un ou de plusieurs des éléments suivants :
des informations relatives aux ressources de traitement estimées nécessaires dans chaque créneau d'une sous-trame pour chacune des cellules ; et
un décalage de synchronisation de transmission à appliquer à au moins l'une des cellules.

10. Procédé selon la revendication 9, comprenant en outre les étapes consistant à :
recevoir (1540), de la fonction de gestion de cellule, une seconde configuration de synchronisation de transmission pour la pluralité de cellules, dans lequel pour au moins l'une des cellules, la seconde configuration de synchronisation de transmission inclut un décalage de synchronisation de transmission par rapport à la première configuration de synchronisation de transmission ;
estimer (1550) les ressources de traitement supplémentaires nécessaires, au cours d'une troisième durée ultérieure, pour les communications de PHY dans la pluralité de cellules sur la base de la seconde configuration de synchronisation de transmission ; et
envoyer (1560), à la fonction de gestion des ressources, une demande pour les ressources de traitement supplémentaires estimées pendant la troisième durée.

11. Système de traitement (725, 735, 930, 1000) pour la planification de ressources de traitement dans un réseau sans fil (199, 299, 700) pour l'exécution de tâches d'un traitement de couche physique, PHY, d'une unité de bande de base, BBU, le système de traitement incluant :
une pluralité d'unités de traitement (940, 1030) ; et
une ou plusieurs mémoires (1090) stockant des instructions exécutables correspondant à :
une fonction de gestion des ressources (950, 1050) agencée pour allouer les unités de traitement aux tâches logicielles associées aux communications de PHY ; et
un planificateur de ressources de tâches, TRS, de PHY (820, 920, 1015, 1022), dans lequel l'exécution des instructions par les unités de traitement configure le TRS pour :
estimer des ressources de traitement nécessaires, pendant une deuxième durée ultérieure, pour des communications de PHY dans une ou plusieurs cellules du réseau sans fil, sur la base :
d'une première configuration de synchronisation de transmission pour les une ou plusieurs cellules, d'une charge de travail actuelle des unités radio, RU, desservant les une ou plusieurs cellules, et
d'informations relatives au trafic de données utilisateur planifié pour une transmission ou une réception dans les une ou plusieurs cellules pendant une première durée qui précède la deuxième durée d'au moins un retard de planification associé aux ressources de traitement ; et
envoyer, à une fonction de gestion de ressources, une demande relative aux ressources de traitement estimées pendant la deuxième durée.

12. Système de traitement selon la revendication 11, dans lequel l'exécution des instructions par les unités de traitement configure en outre le TRS pour effectuer des opérations correspondant à l'un quelconque des procédés selon les revendications 2-10.

13. Réseau sans fil (199, 299, 700) comprenant :
une pluralité d'unités radio, RU (721-723, 731-733) desservant chacune une ou plusieurs cellules du réseau sans fil ; et
une ou plusieurs unités distribuées virtualisées, vDU (720, 730), dans lequel :
chaque vDU est couplée de manière communicative à une RU différentes des unes ou plusieurs des RU ; et
chaque vDU inclut le système de traitement (725, 735, 930, 1000) selon l'une des revendications 11-12.

14. Planificateur de ressources de tâches, TRS (820, 920, 1015, 1022), configuré pour planifier des ressources de traitement dans un réseau sans fil (199, 299, 700) pour l'exécution de tâches de traitement de couche physique, PHY, d'une unité de bande de base, BBU, le TRS étant en outre configuré pour :
estimer des ressources de traitement nécessaires, pendant une deuxième durée ultérieure, pour des communications de PHY dans une ou plusieurs cellules du réseau sans fil, sur la base :
d'une première configuration de synchronisation de transmission destinée aux une ou plusieurs cellules, d'une charge de travail actuelle d'unités radio, RU, desservant les une ou plusieurs cellules, et d'informations relatives au trafic de données utilisateur planifié pour une transmission ou une réception dans les une ou plusieurs cellules pendant une première durée qui précède la deuxième durée d'au moins un retard de planification associé aux ressources de traitement ; et
envoyer, à une fonction de gestion de ressources, une demande relative aux ressources de traitement estimées pendant la deuxième durée.

15. TRS selon la revendication 14, étant en outre configuré pour effectuer des opérations correspondant à l'un quelconque des procédés selon les revendications 2-10.
